# DEMANDE DE BREVET EUROPEEN

(11) **EP 0 677 476 A1**
(43) Date de publication de la demande: **18.10.1995**
(21) Numéro de dépôt: 95420083.8
(22) Date de dépôt: 30.03.1995
(51) Int. Cl.: B66C 1/12, B65G 1/04

(54) **Dispositif pour le transfert et la manipulation de pièces allongées**

(30) Priorité: 12.04.1994 FR 9404670
(71) Demandeur: ICBT MACOTEX, F-69740 Genas (FR)
(72) Inventeur: Flechon, Philippe, F-69300 Caluire (FR)
(74) Mandataire: Laurent, Michel

(57) **Abrégé**

Dispositif pour le transfert de pièces allongées au moyen d'un chariot (1), cKaractérisé en ce qu'il comprend:
- une bande souple formée d'au moins deux parties, respectivement une partie pleine (2) et une partie évidée (4,5), les deux parties étant solidaires d'une barre rigide (3),
- deux arbres moteurs (6,7) fixés sous le chariot (1), reliés à chaque extrémité de la bande,
- des moyens (10,11) pour actionner les deux arbres (6,7),
- des moyens (12,13) pour recevoir et maintenir la barre rigide (3), de sorte que lorsque celle-ci est en place dans lesdits moyens, la barre de jonction (3) est parallèle aux arbres (6,7) et la partie pleine de la bande souple (2) forme un berceau (20) apte à recevoir la pièce (21) allongée à manipuler sans qu'elle ne se balance.

## Description

### Domaine technique

L'invention concerne le domaine du transfert et la manipulation de pièces allongées, notamment de corps de révolution de préférence cylindrique tels que des tubes et des pièces de tissu.

Dans la suite, on appellera pièce allongée toute pièce de révolution de préférence cylindrique.

Dans les exemples, on s'attachera plus particulièrement au cas des pièces de tissu.

### Technique antérieure

La manipulation de pièces allongées est assurée, de manière connue, par différentes méthodes dont aucune ne s'applique à une grande variété de formes, de textures et de matières.

Une méthode connue consiste à utiliser des pinces comme moyen de préhension de la pièce allongée à déplacer. Malheureusement cette technique n'est pas appropriée pour la manipulation de pièces de diamètres variés. De plus le serrage des pinces est un inconvénient pour le transport de matières fragiles ou molles.

Une autre méthode bien connue consiste à manipuler les pièces par leur tube central. Bien évidemment, cela nécessite l'existence d'un tel tube ce qui n'est pas toujours le cas. En outre, les diamètres des tubes sont généralement très divers et l'engin de manipulation doit s'adapter à chaque pièce.

On connaît également la technique consistant à transporter les pièces au moyen de fourches en forme de berceaux ou d'augets. Les manoeuvres à effectuer pour charger et décharger les pièces nécessitent des dispositifs mécaniques complexes.

### Exposé de l'invention

L'invention vise un dispositif économique, simple mécaniquement et utilisable pour tout type de pièces allongées.

Elle consiste en un dispositif pour le transfert et la manipulation de pièces allongées au moyen d'un chariot susceptible de se déplacer d'un premier poste de chargement de la pièce à un second poste de réception où la pièce doit être transférée, qui se caractérise en ce qu'il comprend:
- une bande souple formée d'au moins deux parties, respectivement une partie pleine et au moins une partie évidée, les deux parties étant solidaires à leur jonction d'une barre rigide,
- deux arbres moteurs parallèles fixés sous le chariot, le premier arbre étant relié à une extrémité de la bande souple, le second arbre étant relié à l'extrémité opposée de la bande souple,
- des moyens pour actionner indépendamment ou simultanément les deux arbres,
- des moyens pour recevoir et maintenir la barre rigide, de sorte que lorsque celle-ci est en place dans lesdits moyens, la barre de jonction est parallèle aux arbres et la bande souple forme un berceau apte à recevoir la pièce allongée à manipuler sans qu'elle ne se balance.

En d'autres termes, le dispositif permet
- de former dans une bande souple un creux destiné à recueillir la pièce à transporter,
- d'enrouler cette bande à ses deux extrémités de façon à transporter la pièce à une altitude choisie,
- d'enrouler l'extrémité pleine et dérouler l'extrémité évidée simultanément de manière à faire disparaître le creux réceptade et donc à déposer la pièce.

Avantageusement, en pratique la partie pleine de la bande souple est en tissu et la partie évidée est constituée de deux sangles parallèles fixées à la barre rigide aux bords du tissu.

Dans une forme pratique d'exécution, l'arbre sur lequel viennent s'enrouler les sangles comprend deux bobines à joues destinées à recevoir les sangles au fur et à mesure de leur enroulement.

Dans une forme évoluée de l'invention, la face inférieure du chariot comprend une plaque d'appui disposée entre les deux arbres et contre laquelle vient fermement s'appuyer la pièce allongée lors du transfert.

Dans une forme préférée de réalisation, cette plaque d'appui est en forme de V renversé et comporte un capteur, destiné, sous l'effet de la pression exercée par la pièce en appui, à confirmer le blocage de la pièce en position haute et autoriser le transfert du chariot.

De manière pratique, les moteurs des arbres destinés à enrouler les sangles ou la partie pleine de la toile sont du type moteur frein à réducteur intégré. Il en est de même pour les moteurs disposés sur le chariot et destinés à mouvoir ce chariot dans l'espace.

Dans une forme de réalisation pratique, le dispositif selon l'invention est employé dans un ensemble pour le stockage de pièces allongées dans des casiers élémentaires juxtaposés et/ou superposés dans lequel lesdits casiers sont agencés sur les traverses d'un portique surmonté de deux rails horizontaux parallèles caractérisé en ce que:
- les colonnes de casiers sont espacées par un intervalle
- l'ensemble comprend un dispositif de transfert selon l'invention apte à se translater horizontalement sur les rails et à descendre les pièces allongées dans le dit intervalle pour les déposer dans lesdits casiers.

Dans une forme d'exécution particulière, la bande comprend trois parties, respectivement une partie centrale pleine reliée à chacune de ses extrémités par une barre rigide à une partie évidée s'enroulant chacune autour d'un arbre moteur.

### Description sommaire des dessins

La manière dont l'invention peut être réalisée et les avantages qui en découlent ressortiront mieux des exemples de réalisation qui suivent, donnés à titre indicatif et non limitatif, à l'appui des figures annexées.

La figure 1 est une vue sommaire en perspective éclatée de l'invention.

Les figures 2 à 7 sont des schémas illustrant les différentes phases du transport, à savoir:

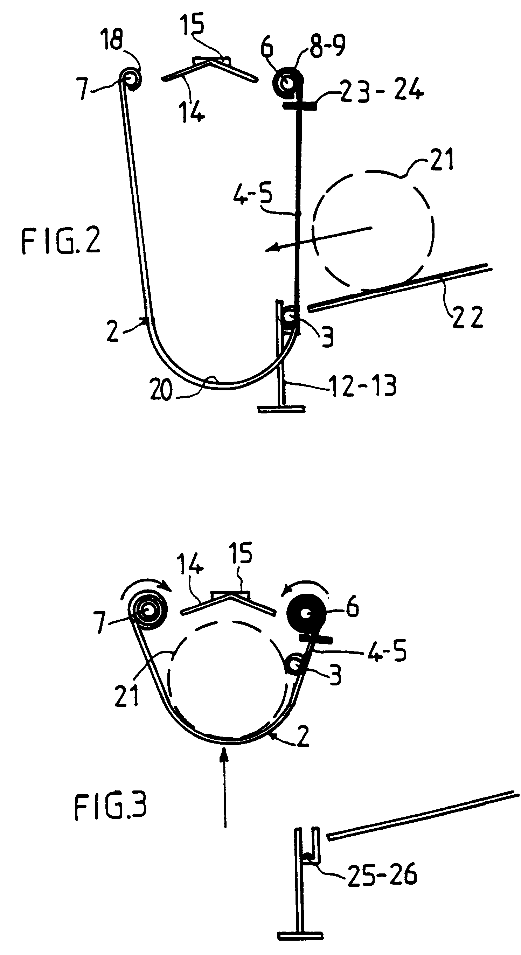

figure 2: le chargement

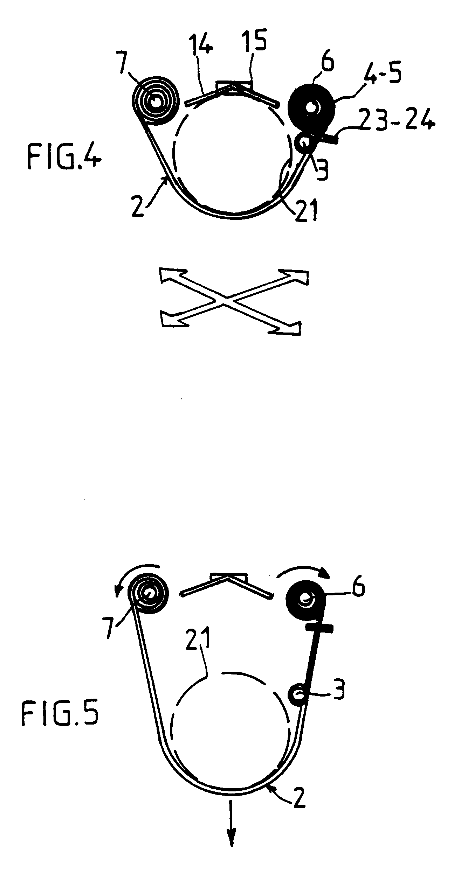

figure 3: la montée et le blocage
figure 4: le transfert

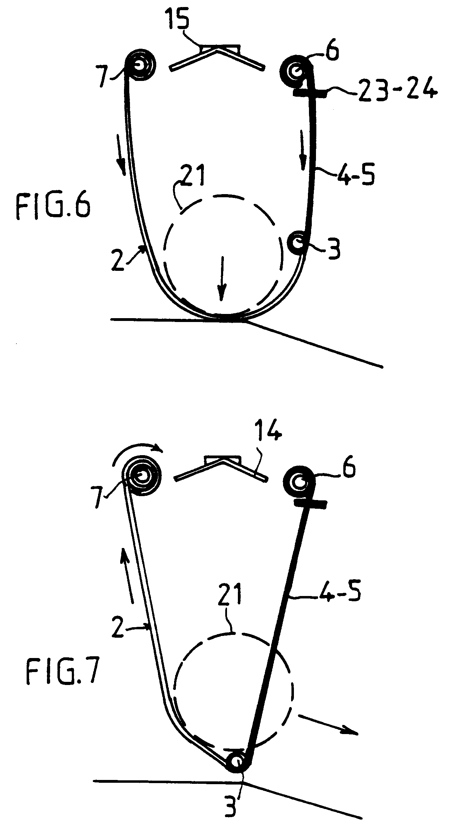

figure 5: la descente
figure 6: la détection du contact
figure 7: la dépose

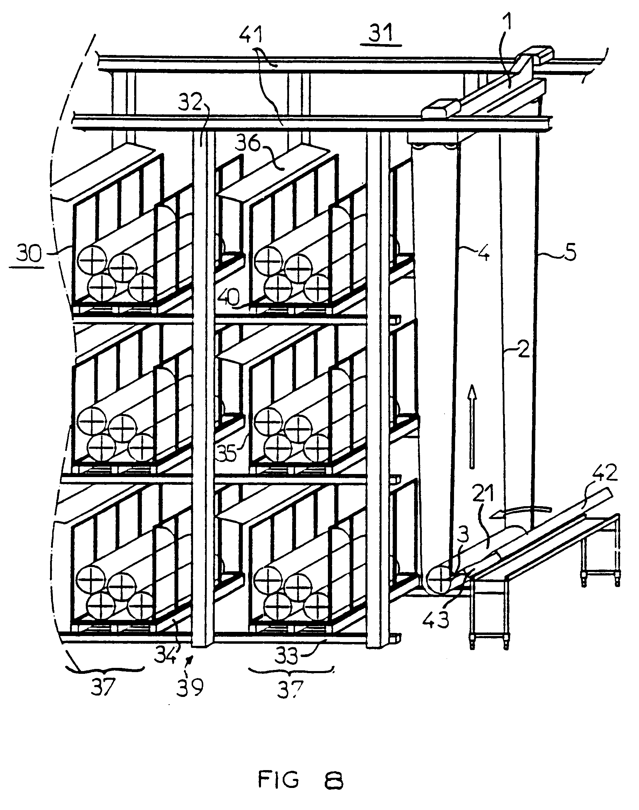

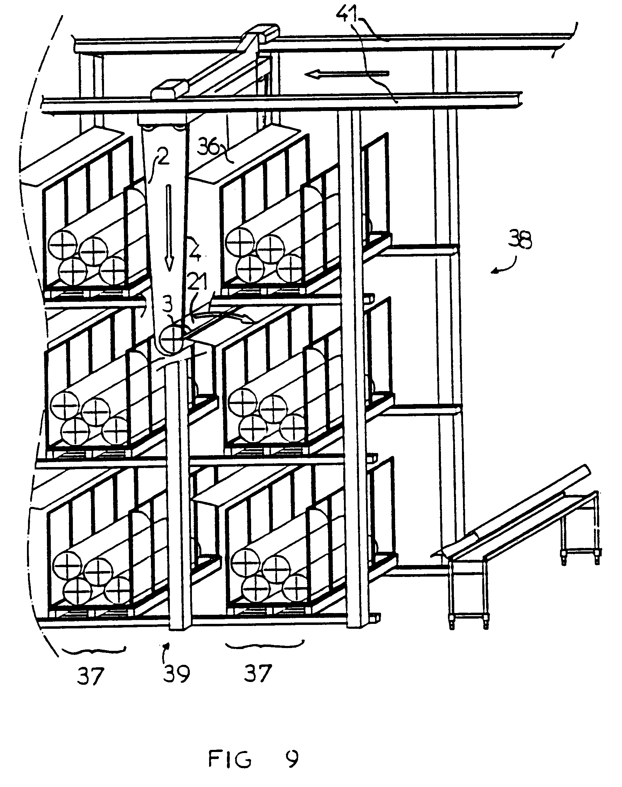

Les figures 8 et 9 illustrent une utilisation du dispositif de l'invention dans un ensemble de stockage, la figure 8 montrant une phase de chargement et la figure 9 schématisant la phase de décharge.

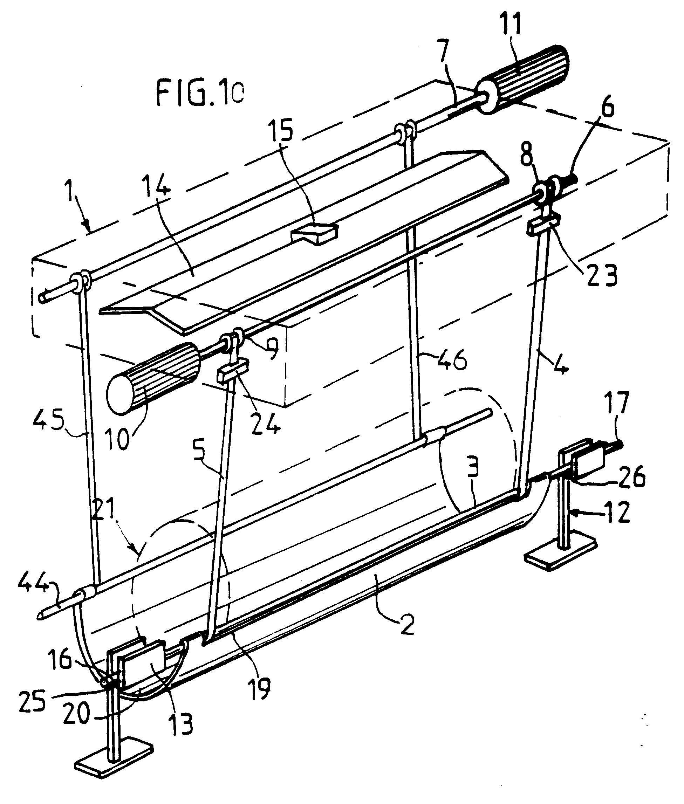

La figure 10 montre une forme d'exécution particulière dans laquelle la bande souple est faite de trois parties.

### Manière de réaliser l'invention

### Description du dispositif

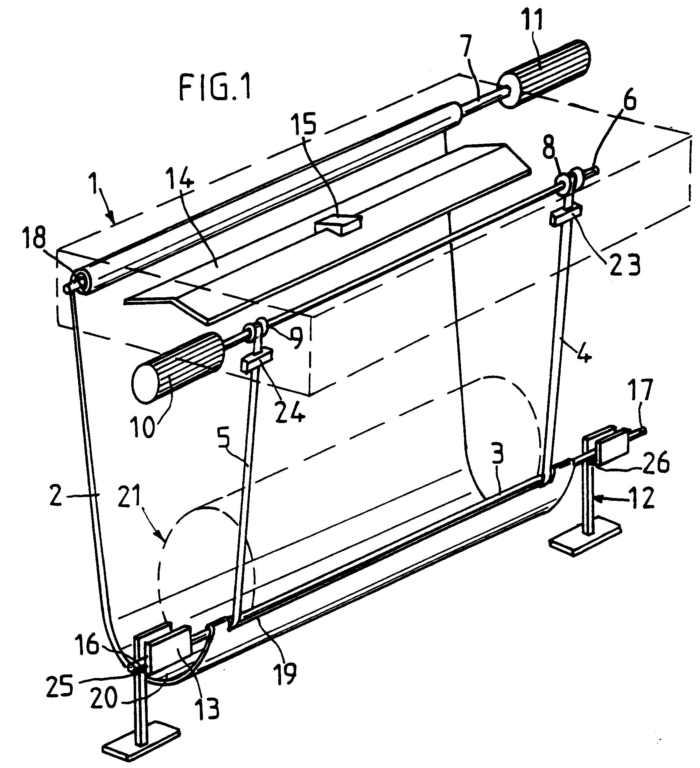

Le dispositif selon l'invention, comme représenté en vue d'ensemble en figure 1, est constitué d'un chariot (1), d'une bande souple (2,3,4 et 5) et de deux arbres (6,7).

La bande souple est réalisée en deux parties: la première partie (2) est pleine. Elle est reliée à un des deux arbres (7) par une extrémité (18) et à la barre rigide de jonction (3) par l'extrémité opposée (19). La deuxième partie de la bande est évidée et est réalisée par deux sangles (4,5) situées chacune dans un plan vertical perpendiculaire à l'arbre (6,7). Chacune de ces sangles relie une extrémité (16,17) de la barre de jonction (3) avec l'arbre (6) sur lequel elle s'enroule dans une bobine à joues (8,9). Telle que représenté en figure 1, la barre rigide (3) repose par ses extrémités (16,17) dans des guides (12,13) fixes, solidaires du sol par exemple. De la sorte la partie pleine de la bande (2) forme un creux (20) dans lequel peut se loger une pièce allongée (21).

Les deux arbres (6,7) sont logés en partie inférieure du chariot. Ils sont parallèles à l'axe de la pièce allongée (21). Un des deux arbres (6) est destiné à enrouler les sangles (4,5) et l'autre (7) reçoit la partie pleine (2) de la bande souple. Les arbres (6,7) comportent chacun un moteur (10,11) situés à leur extrémité. Les deux moteurs sont de préférence placés chacun d'un coté du chariot pour équilibrer les masses.

En pratique, la partie pleine de la bande souple (2) est réalisée en un tissu enduit ce qui lui confère des propriétés de solidité ainsi que de tenue. De la même manière, les sangles (4,5) sont en matériau résistant pour supporter le poids du chargement.

Les moteurs sont de préférence des moteurs frein asynchrones à réducteur intégré.

### Description du fonctionnement du dispositif

Le dispositif fonctionne selon les étapes suivantes:

### 1. Le chargement

Lors de la phase de chargement (figure 2), la barre rigide (3) est amenée par les sangles (4,5) à une hauteur suffisante et la bande pleine (2) est déroulée de manière à former un creux (20) susceptible de recevoir la pièce de tissu (21). La pièce (21) peut être amenée à proximité de la barre (3) par divers moyens, un chariot élévateur (22), par exemple. L'inclinaison du plateau (22) provoque le glissement ou le roulement de la pièce (21) par dessus la barre (3) jusque dans le creux (20). De manière plus avantageuse, la zone de chargement coïncide avec la sortie d'une machine de traitement.

Les extrémités de la barre (3) sont logées dans des guides (12,13) de façon à maintenir cette barre (3) lors du basculement de la charge (21) dans le creux (20). En effet sans ce maintien, la pièce (21) et la toile (2) se balanceraient avec des risques de versage.

Dans une réalisation élaborée, des capteurs placés dans les encoches des guides confirment la présence de la barre et autorisent le déversement si celui-ci est réalisé par un dispositif automatique. Le chargement effectif est confirmé par la mesure de tension de la bande souple.

### 2. La montée et le blocage

Après son chargement, la pièce (21) est hissée sous le chariot (1) par l'enroulement simultané de la partie pleine de la bande (2) et des sangles (4,5). La montée (voir figure 3) se fait jusqu'à ce que la pièce (21) atteigne la plaque d'appui (14) située entre les deux arbres (6,7). Un capteur (15) de pression placé sur la plaque d'appui (14) indique au dispositif de commande que la pièce (21) est maintenue et susceptible d'être déplacée. L'utilisation de moteurs-frein (10,11) permet de maintenir la position de la pièce sans alimentation des moteurs.

### 3. Le déplacement

Le chariot (1) se déplace ensuite sans risque de chute de la pièce (voir figure 4) . Les moyens de déplacement peuvent être très divers: le chariot peut êtreinstallé sous un pont, suspendu sous des rails, être chargé sur un véhicule, ou tout autre moyen de manutention.

### 4. La descente

Pendant la phase de descente (voir figure 5) les sangles (4,5) et la bande pleine (2) sont déroulées simultanément de sorte que la pièce (21) subit une translation vers le bas.

### 5. La hauteur de dépose

La hauteur de dépose peut être établie par un dispositif de détection de la hauteur de la barre ou par le comptage de la longueur de bande déroulée ou tout autre dispositif de positionnement vertical

Dans une réalisation plus élaborée, dès que la pièce atteint les pièces déjà déposées ou le fond du receptacle (voir figure 6), les sangles se détendent et la mesure de tension des sangles informe le dispositif de commande qui peut déclencher la dépose proprement dite. Ce système permet de déposer quel que soit le niveau de remplissage du receptacle.

### 6. La dépose

La dépose (voir figure 7) est provoquée par l'enroulement de la bande pleine (2) et le déroulement des sangles (4,5). Cela entraîne la rotation de la pièce (21) jusqu'au moment où la pièce (21) passe sur la barre rigide (3) et bascule. Ensuite la bande pleine (2) est libérée et le dispositif peut être rembobiné. La dépose s'effectue sans chute donc sans dommage ni pour la pièce transportée ni pour celles déjà posées.

Il apparaît de la description du fonctionnement que l'invention comporte de nombreux avantages. D'une part, le fait d'utiliser une bande souple pour le transport de la pièce permet de s'adapter à des formes très diverses et à des matières fragiles. D'autre part, la conception mécanique du dispositif en fait un engin simple, fiable et qui manipule les pièces sans chocs ni a-coups.

### Utilisation du dispositif dans un magasin de stokage

L'invention est particulièrement adaptée aux opérations de stockage comme schématisé en figures 8 et 9

Cette installation est constituée:
- d'un portique (31) contenant des casiers (30) disposés en colonnes (37)
- d'un chariot (1) selon l'invention qui décharge les pièces (21) en les faisant descendre entre les colonnes (37) et qui les dépose en les basculant dans les casiers (30).

Le portique (31) est constitué de piliers verticaux (32) et de poutres longitudinales (33). Entre les piliers (32) et reposant sur les poutres longitudinales (33) placées de part et d'autre du portique, se trouvent des palettes (34) dont la pose et l'enlevement se fait par les cotés (38,39) du portique (31) avec un chariot élévateur à fourche.

Sur chacune de ces palettes (34) disposées en colonnes (37) est posé un casier (30) comprenant un fond (40) et deux faces verticales (35) empéchant la chute des pièces qui y sont rangées. En haut de la face du casier (30) située dans l'espace entre deux colonnes se trouve un plan incliné (36) en tole formant une pente pour permettre aux pièces de rouler dans le casier (30) lorsqu'elles quittent le dispositif manipulateur.

Sur le haut du portique (31) sont placés deux rails (41) horizontaux qui permettent le déplacement du chariot (1) au dessus des différentes colonnes (37) de casiers. Un tapis inclineur (42) permet d'amener les pièces allongées à proximité du portique et dans la zone de chargement du dispositif manipulateur.

Le fonctionnement de l'ensemble de stockage se déroule suivant les étapes suivantes:

### 1. La charge de la piece par le chariot manipulateur.

Une pièce (21) est posée sur le tapis inclineur (42). Le dispositif manipulateur a sa barre rigide (3) maintenue par des guides (43) dans une position proche du tapis inclineur (42). La bande pleine (2) est suffisament déroulée pour former un berceau qui reçoit la pièce (21) lors de l'inclinaison du tapis (42).

Ensuite la pièce est montée sous le chariot (1) par enroulement des sangles (4,5) et de la bande pleine (2). La position haute est maintenue et le chariot (1) est prêt pour se déplacer.

### 2. Le déplacement

Le chariot (1) va se positionner à proximité de la verticale de la zone de déchargement. Le chariot se déplace en roulant sur les rails (41) placés en haut du portique. Le déplacement s'arrete lorsque le chariot se trouve au dessus de l'espace vide situé entre deux colonnes (37) de casiers.

### 3. La descente

Les sangles (4,5) et la bande pleine (2) sont déroulées simultanément de manière à amener la pièce (21) à proximité du casier destinataire (30).

### 4. La décharge

Pour faire basculer la pièce (21) dans le casier (30), les sangles (4,5) sont maintenues dans leur position et la bande pleine (2) est enroulée en entrainant la barre rigide (3) vers le haut et faisant rouler la pièce (21) sur elle-même. Dès que la barre rigide (3) passe en dessous du centre de gravité de la pièce (21), celle-ci bascule sur le plan incliné (36) de la face du casier et roule jusqu'à tomber au fond du casier.

### 5. Le retour à la zone de chargement

La bande pleine (2) et les sangles (4,5) sont enroulées jusque sous le chariot (1). Puis celui-ci fait le chemin inverse pour retourner à la verticale de la zone de chargement. Ensuite la bande pleine (2) et les sangles (4,5) sont déroulées jusqu'à ce que la barre (3) vienne loger ses extrémités dans le guide (43) solidaire du tapis inclineur (42).

### Variante de réalisation

Dans la forme de réalisation schématisée en figure 10 la bande souple est formée de trois parties. Une partie pleine (2) comprend à ses extrémités des barres rigides (3,44). Aux extrémités de chacune de ces barres sont fixées des sangles (4,5,45,46) destinées à s'enrouler autour des arbres moteurs (6,7).

Dans cette forme de réalisation le dispositif est symétrique, ce qui présente comme avantage de permettre le chargement et la dépose de la pièce à transporter par les deux cotés de la bande souple.

### Possibilités d'applications industrielles

Il découle des avantages énoncés précédemment que l'invention est particulièrement adaptée:
- pour la manipulation de pièces textiles notamment les rouleaux de tissu mais aussi les balles de coton
- pour la manipulation de rouleaux de papier, de films plastique
- pour la manipulation de pièces allongées en vrac (tuyaux, planches etc... )

## Revendications

**1/** Dispositif pour le transfert et la manipulation de pièces allongées au moyen d'un chariot (1) susceptible de se déplacer d'un premier poste de chargement de la pièce à un second poste de réception où la pièce (21) doit être transférée, caractérisé en ce qu'il comprend:
- une bande souple formée d'au moins deux parties, respectivement une partie pleine (2) et au moins une partie évidée (4,5), les deux parties étant solidaires à leur jonction d'une barre rigide (3),
- deux arbres moteurs parallèles (6,7) fixés sous le chariot (1), le premier arbre (6) relié à une extrémité de la bande, le second arbre (7) relié à l'extrémité opposée de la bande,
- des moyens (10,11) pour actionner indépendamment ou simultanément les deux arbres (6,7),
- des moyens (12,13) pour recevoir et maintenir la barre rigide (3), de sorte que lorsque celle-ci est en place dans lesdits moyens, la barre de jonction (3) est parallèle aux arbres (6,7) et la partie pleine de la bande souple (2) forme un berceau (20) apte à recevoir la pièce (21) allongée à manipuler sans qu'elle ne se balance.

**2/** Dispositif selon la revendication 1, caractérisé en ce que la bande souple comprend trois parties, respectivement une partie centrale pleine (2) reliée à chacune de ses extrémités par une barre rigide (3,44) à une partie évidée (4,5,45,46) s'enroulant chacune autour d'un arbre moteur (6,7).

**3/** Dispositif selon la revendication 1 ou 2, caractérisé en ce que la bande souple est formée dans la partie pleine (2) d'un tissu et dans la partie évidée de deux sangles (4,5) parallèles fixées à la barre rigide (3) sur les bords du tissu.

**4/** Dispositif selon l'une des revendications 1 à 3, caractérisé en ce que les arbres (7) destinés à enrouler les sangles (4,5) comprennent chacun deux bobines à joues (8,9) destinées à recevoir les sangles (4,5) au fur et à mesure de leur enroulement.

**5/** Dispositif selon l'une des revendications 1 à 4, caractérisé en ce que la face inférieure du chariot (1) comprend une plaque d'appui (14) disposée entre les deux arbres (6,7) et contre laquelle vient fermement s'appuyer la pièce allongée (21) lors du transfert.

**6/** Dispositif selon l'une des revendications 1 à 5, caractérisé en ce que la plaque d'appui (14) épouse une forme de V renversé dont le sommet comporte un capteur (15) destiné, sous l'effet de la pression exercée par la pièce (21) en appui, à confirmer le blocage de la pièce en position haute et autoriser le transfert du chariot.

**7/** Dispositif selon l'une des revendications 1 à 6, caractérisé en ce que les moteurs (10,11) de commande des arbres (6,7) et du chariot (1) sont des moteurs freins à réducteurs intégrés.

**8/** Dispositif selon l'une des revendications 1 à 7, caractérisé en ce que la hauteur de dépose est déterminée grâce à la mesure de la longueur de la bande déroulée ou par détection de la position de la barre.

**9/** Dispositif selon l'une des revendications 1 à 7, caractérisé en ce que la hauteur de dépose est déterminée par détection du contact avec les pièces déposées antérieurement grace à la mesure de la tension des sangles (4,5) ou de la bande pleine (2).

**10/** Ensemble pour le stockage de pièces allongées dans des casiers (30) élémentaires juxtaposés et/ou superposés dans lequel lesdits casiers sont agencés sur les traverses (33) d'un portique (31) surmonté de deux rails (41) horizontaux parallèles caractérisé en ce que:
- les colonnes (37) de casiers sont espacés par un intervalle
- l'ensemble comprend un dispositif de transfert selon l'une des revendications 1 à 9 apte à se translater horizontalement sur les rails et à descendre les pièces (21) allongées dans le dit intervalle pour les déposer dans lesdits casiers (30).
